# NEUE EUROPÄISCHE PATENTSCHRIFT

(11) **EP 3 060 829 B2**
(45) Veröffentlichungstag und Bekanntmachung des Hinweises auf die Entscheidung über den Einspruch: **22.10.2025**
(45) Hinweis auf die Patenterteilung: 23.12.2020
(21) Anmeldenummer: 14801925.0
(22) Anmeldetag: 23.10.2014
(51) Int. Cl.: F16F 15/14, F16F 15/123

(54) **KUPPLUNGSSCHEIBE**
CLUTCH DISK
DISQUE D'EMBRAYAGE

(30) Priorität: 24.10.2013 DE 102013221607
(43) Veröffentlichungstag der Anmeldung: 31.08.2016
(73) Patentinhaber: Schaeffler Technologies AG & Co. KG, 91074 Herzogenaurach (DE)
(72) Erfinder: RUSCH, Alain, 67170 Brumath (FR)
(74) Vertreter: Winter, Brandl - Partnerschaft mbB
(86) Internationale Anmeldenummer: PCT/DE2014/200591
(87) Internationale Veröffentlichungsnummer: WO 2015/058766

(56) Entgegenhaltungen:
- EP-A1- 2 607 743
- DE-A1- 102009 042 825
- DE-A1- 102010 054 556
- DE-A1- 102011 011 469
- DE-A1- 102011 086 532
- DE-A1- 19 911 561
- FR-A1- 2 986 593

## Beschreibung

Die Erfindung betrifft eine Kupplungsscheibe, insbesondere für den Antriebsstrang eines Kraftfahrzeugs.

Kupplungsscheiben mit Drehschwingungsdämpfern sind bei Kraftfahrzeugen im Antriebsstrang angeordnet um die Drehmomentungleichförmigkeiten aufgrund des Verbrennungsprozesses zu dämpfen. Dabei sind Drehschwingungsdämpfer mit Fliehkraftpendel bekannt geworden, bei welchem das Fliehkraftpendel mit einer Scheibe auf der Nabe der Kupplungsscheibe befestigt ist und beiderseits der Scheibe als Träger die Fliehgewichte als Pendelmassen über Bahnen in der Scheibe verlagerbar angeordnet sind. Dabei sind die Pendelmassen derart angeordnet, dass die Pendelmassen mit einem vorgegebenen Abstand zur Scheibe versehen sind, damit die freie Verlagerbarkeit der Pendelmassen zur optimalen Schwingungsdämpfung gewährleistet ist. Dies ist jedoch hinsichtlich des benötigten Bauraums negativ, weil dadurch zusätzlicher Bauraum benötigt wird, welcher für andere Elemente der Kupplungsscheibe dann nicht mehr zur Verfügung steht. Auch sind aufgrund der Tatsache, dass die Pendelmassen auf beiden Seiten der Scheibe angeordnet sind, diese miteinander zu verbinden. Diese sind mit Abstandselementen miteinander vernietet, wodurch ein Versatz der Fliehgewichte auftreten kann, was zu einer Verschlechterung der Dämpfungseigenschaften führen kann.

DE 10 2011 086532 A1 offenbart eine Kupplungsscheibe, aufweisend ein Fliehkraftpendel mit einem Trägerflansch und zumindest einer Pendelmasse, die gegenüber dem Trägerflansch mittels auf Laufbahnen von im Trägerflansch und in den Pendelmassen vorgesehen Ausschnitten abwälzenden Wälzkörpern in Umfangsrichtung und radial begrenzt verschwenkbar angeordnet ist.

Es ist die Aufgabe der Erfindung eine Kupplungsscheibe zu schaffen, welche einfach und kostengünstig herzustellen ist und die Nachteile des Standes der Technik reduziert.

Die Aufgabe der Erfindung wird mit den Merkmalen von Patentanspruch 1 gelöst. Bevorzugte Ausführungsbeispiele sind in den abhängigen Patentansprüchen dargelegt.

Ein Ausführungsbeispiel der Erfindung betrifft eine Kupplungsscheibe mit Reibbelägen als Eingangselement und einer Nabe als Ausgangselement, wobei das Eingangselement relativ zu dem Ausgangselement entgegen der Kraft zumindest eines Kraftspeichers verdrehbar ist, wobei mit dem Eingangselement oder dem Ausgangselement ein Träger verbunden ist, welcher aus zwei miteinander verbundenen Trägerscheiben ausgebildet ist, wobei zwischen den beiden Trägerscheiben zumindest eine Pendelmasse relativ zu den Trägerscheiben verlagerbar ist.

Dabei ist es besonders vorteilhaft, wenn die zumindest eine Pendelmasse über axial vorspringende Elemente in Führungsbahnen in den Trägerscheiben aufgenommen und geführt ist. Dadurch kann die Pendelmasse beiderseits in Führungsbahnen der Trägerscheiben geführt werden, was die axiale Positionierung eindeutig festlegt.

Auch ist es vorteilhaft, wenn die zumindest eine Pendelmasse zumindest eine Führungsbahn aufweist, in welcher ein Führungsbolzen verlagerbar eingreift, welcher ebenso mit seinen vorspringenden Elementen in jeweils eine Führungsbahn der benachbarten Trägerscheiben eingreift. Dadurch kann die Pendelmasse auch über die Ausdehnung der Führungsbahnen in den Trägerscheiben verlagert werden, was die Dämpfungseffekte verbessert.

Weiterhin ist es vorteilhaft, wenn zwischen den Trägerscheiben zwei, drei oder mehr Pendelmassen über den Umfang verteilt angeordnet sind. Dies bewirkt eine weitere Verbesserung der Effektivität der Dämpfungswirkung, da die Pendelmassen parallel wirken und damit die effektive Pendelmasse erhöht ist.

Auch ist es vorteilhaft, wenn pro Pendelmasse zwei Führungsbolzen vorgesehen sind, welche jeweils in eine Führungsbahn der Trägerscheiben und/oder der Pendelmasse eingreifen. Dadurch kann eine eindeutige Positionierung der Pendelmasse zwischen den Trägerscheiben erreicht werden.

Auch ist es vorteilhaft, wenn die Führungsbahn in der Trägerscheibe bogenförmig ausgebildet ist, wobei der Bogen nach radial innen offen ausgebildet ist. Dabei verlagert sich die Pendelmasse bei Verlagerung in Umfangsrichtung aus einer Mittenstellung nach radial innen.

Auch ist es zweckmäßig, wenn die Führungsbahn in der Pendelmasse bogenförmig ausgebildet ist, wobei der Bogen nach radial außen offen ausgebildet ist. Somit wird der Effekt der Verlagerung der Pendelmasse durch Verlagerung des Führungsbolzens in der Führungsbahn der Pendelmasse weitergeführt.

Erfindungsgemäß ist es, wenn radial innerhalb der Pendelmassen Anschlagmittel vorgesehen sind zum Dämpfen der radialen Bewegung der Pendelmasse zwischen den Trägerscheiben.

Weiterhin ist es erfindungsgemäß, wenn die beiden Trägerscheiben als Blechscheiben ausgebildet sind, welche in einem radial inneren Bereich aneinander anliegen und in einem radial äußeren Bereich derart ausgestellt sind, dass sie einen Abstand einnehmen und die zumindest eine Pendelmasse zwischen sich aufnehmen. So wird eine kostengünstige Lösung gefunden, die mittels Blechscheiben ausgebildet wird.

Auch ist es erfindungsgemäß, wenn die Anschlagmittel im ausgestellten radial äußeren Bereich angeordnet sind.

Die vorliegende Erfindung wird nachfolgend anhand bevorzugter Ausführungsbeispiele in Verbindung mit den zugehörigen Figuren näher erläutert:
Dabei zeigen:
- Figur 1: eine Kupplungsscheibe in Seitenansicht,
- Figur 2: eine Kupplungsscheibe im Schnitt,
- Figur 3: eine Pendelmassenanordnung in Seitenansicht,
- Figur 4: eine Pendelmassenanordnung in perspektivischer Ansicht,
- Figur 5: eine Pendelmassenanordnung in Seitenansicht,
- Figur 6: eine Pendelmassenanordnung im Schnitt gemäß Linie A-A der Figur 5,
- Figur 7: eine Pendelmassenanordnung im Schnitt gemäß Linie F-F der Figur 5,
- Figur 8: eine Pendelmassenanordnung im Schnitt gemäß Linie B-B der Figur 5,
- Figur 9: eine Pendelmassenanordnung in Seitenansicht mit verlagerten Pendelmassen,
- Figur 10: ein Anschlagmittel in Seitenansicht,
- Figur 11: ein Anschlagmittel im Schnitt gemäß Y-Y der Figur 10, und
- Figur 12: ein Anschlagmittel in perspektivischer Ansicht.

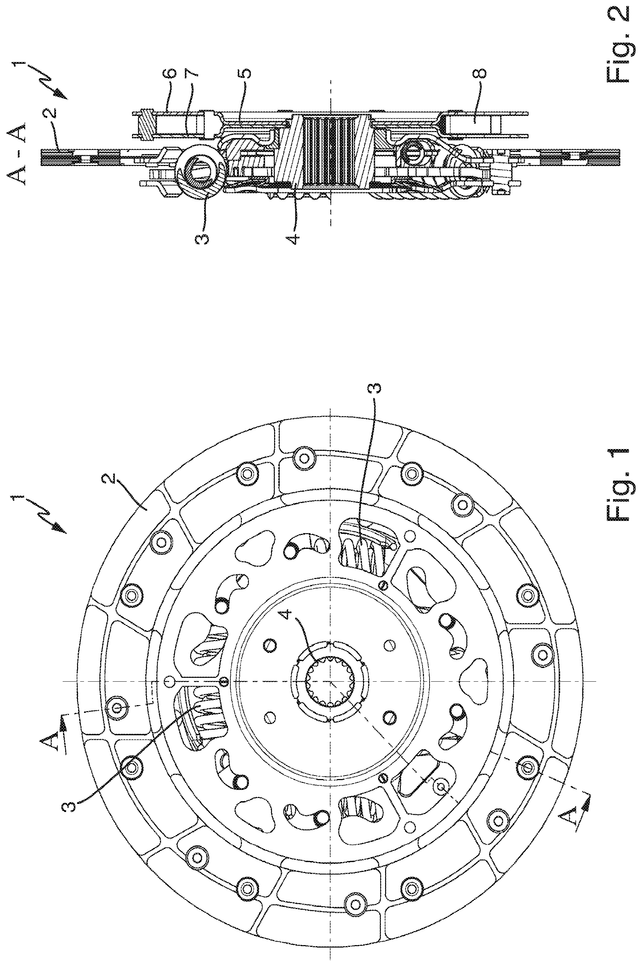

Die Figur 1 zeigt einen Drehschwingungsdämpfer 1 in einer Seitenansicht, wobei die Figur 2 den Drehschwingungsdämpfer 1 im Schnitt zeigt. Der Drehschwingungsdämpfer 1 ist im Ausführungsbeispiel der Figuren 1 und 2 als Kupplungsscheibe dargestellt.

Als Eingangselement 2 des Drehschwingungsdämpfers 1 dienen radial außen angeordnete Reibbeläge, die entgegen der Rückstellkraft zumindest eines Kraftspeichers 3 relativ zu einem Ausgangselement 4, in Form einer Nabe der Kupplungsscheibe verdrehbar ist. Dabei sind mit dem Eingangselement 2 zwei beabstandete Scheiben verbunden, welche Fenster aufweisen, in welchen die Kraftspeicher 3 angeordnet sind. Zwischen die beiden Scheiben greift ein Flansch ein, welcher mit der Nabe 4 verbunden ist und ebenso Fenster aufweist, in welche die Kraftspeicher 3 eingreifen. Aufgrund der Verdrehung zwischen den Scheiben und dem Flansch erfolgt eine Verdrehung zwischen dem Eingangselement 2 und dem Ausgangselement 4 entgegen der Rückstellkraft des Kraftspeichers 3.

Weiterhin weist der Drehschwingungsdämpfer 1 einen Träger 5 auf, welcher aus zwei Trägerscheiben 6, 7 gebildet ist und zwischen den beiden Trägerscheiben 6, 7 zumindest eine Pendelmasse 8 aufweist, die relativ zu den Trägerscheiben 6, 7 verlagerbar ist.

Die Pendelmasse 8 dient der Reduzierung von Torsionsschwingungen und wirkt wie ein Fliehkraftpendel auf einem rotierenden Element des Drehschwingungsdämpfers. Die Pendelmassen führen im Feld der Zentrifugalbeschleunigung Schwingungen auf vorgegebenen Bahnen aus, wenn sie durch Drehzahlungleichförmigkeiten oder Drehmomentschwankungen angeregt werden. Aufgrund dieser Schwingungen wird der Erregerschwingung zu entsprechenden Zeiten Energie entzogen und wieder zugeführt, so dass es zu einer Beruhigung der Erregerschwingung kommt, entsprechend das Fliehkraftpendel als Tilger wirkt. Dabei ist bevorzugt die Eigenfrequenz der Fliehkraftpendelschwingung sowie auch die Erregerfrequenz proportional zur Drehzahl des Drehschwingungsdämpfers. Entsprechend kann die Tilgerwirkung eines Fliehkraftpendels über den gesamten Frequenzbereich bei einer automobilen Anwendung erreicht werden.

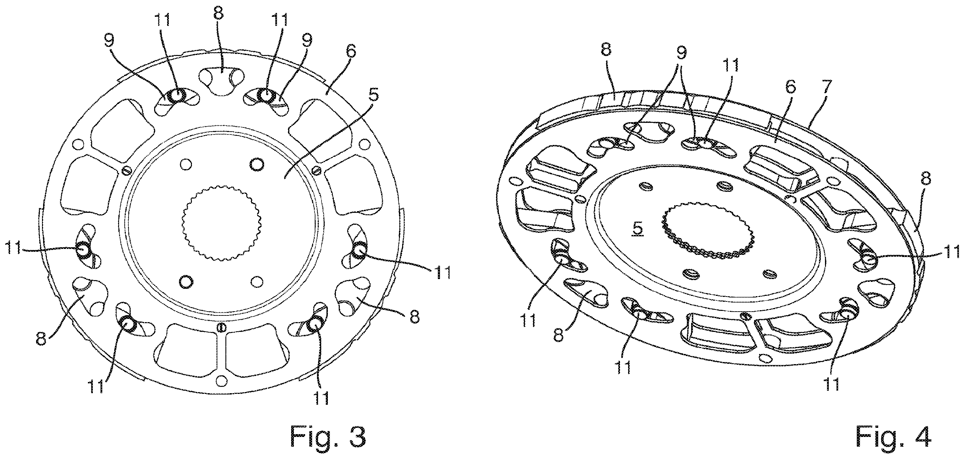

Die Figuren 3, 4 und 5 zeigen den Träger 5 mit den beiden Trägerscheiben 6, 7 und den zwischen den beiden Trägerscheiben 6, 7 angeordneten Pendelmassen 8. Die Pendelmassen 8 sind als Kreisringsegmente ausgebildet, wobei sowohl in den Trägerscheiben 6, 7 als auch in den Pendelmassen 8 jeweils Führungsbahnen 9, 10 vorgesehen sind, in welchen Führungsbolzen 11 verlagerbar angeordnet sind. Dadurch kann sich die Pendelmasse 8 jeweils geführt von zwei Führungsbolzen 11 relativ zu den Träger 5 in Umfangsrichtung verlagern, wobei aufgrund der Geometrie der Führungsbahnen 9, 10 bei einer Verlagerung der Pendelmasse 8 in Umfangsrichtung relativ zu dem Träger 5 eine radiale Bewegung der Pendelmasse 8 erfolgt. Die Führungsbahnen 9 in den Trägerscheiben 6, 7sind bogenförmig ausgebildet, wobei der Bogen nach innen offen ist. Dies bedeutet, dass eine Verschiebung des Führungsbolzens 11 relativ zu der Führungsbahn 9 in Umfangsrichtung ein Verlagern nach radial innen bewirkt. Die Führungsbahnen 10 in den Pendelmassen 8 sind ebenfalls bogenförmig ausgebildet, wobei der Bogen nach radial außen offen ausgebildet sind. Eine Verlagerung der Pendelmasse 8 relativ zum Bolzen 11 bewirkt eine Verlagerung der Pendelmasse 8 nach radial innen.

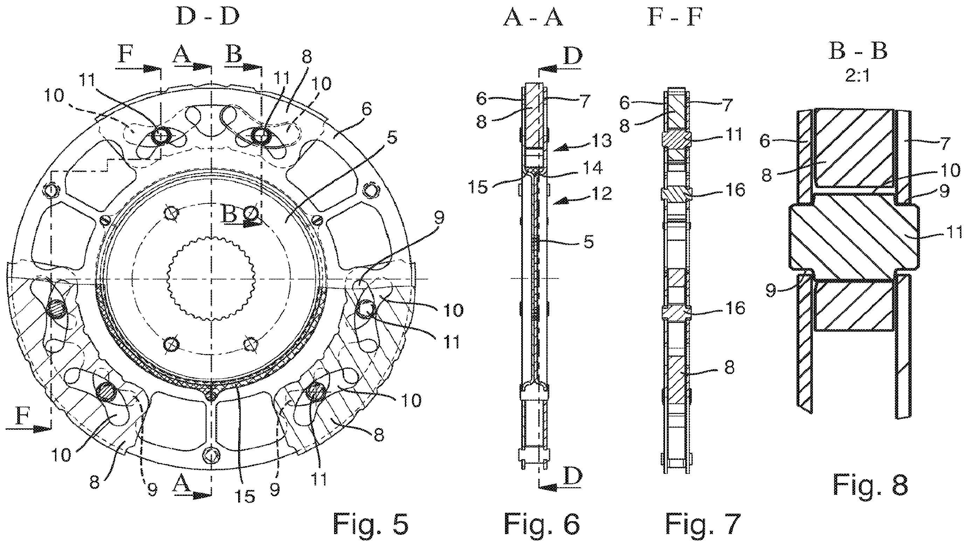

Die Figur 6 zeigt einen Schnitt durch die Anordnung gemäß Figur 5 entlang der Schnittlinie A-A. Dabei ist zu erkennen, dass die beiden Trägerscheiben 6, 7 in einem radial inneren Bereich 12 aneinander anliegen und in einem radial äußeren Bereich 13 voneinander beabstandet sind. Dabei wird die Trägerscheibe 6, 7 im Übergang von dem radial inneren Bereich 12 zu dem radial äußeren Bereich 13 s-förmig abgewinkelt, um sowohl im radial inneren Bereich als auch im radial äußeren Bereich im Wesentlichen eben ausgebildet zu sein, wobei im radial äußeren Bereich 13 der Abstand zwischen den Trägerscheiben 6, 7 vergrößert ist. Im radial äußeren Bereich 13 ist die Pendelmasse 8 zwischen den beiden Trägerscheiben 6, 7 angeordnet, wobei im radial innersten Bereich 14 des radial äußeren Bereichs 13 ein Anschlagmittel 15 ringförmig angeordnet ist, um bei Verlagerung der Pendelmassen 8 nach radial innen als Anschlag zu dienen.

Die Figur 7 zeigt einen Schnitt durch die Anordnung gemäß Figur 5 entlang der Linie F-F. Man erkennt, dass die Trägerscheiben 6, 7 in diesem Schnitt beabstandet voneinander sind und mittels Verbindungselementen 16 miteinander verbunden, wie vernietet sind. Radial außen sind die Führungsbolzen 11 zu erkennen, mittels welchen die Pendelmassen 8 in den Führungsbahnen 9, 10 der Trägerscheiben 6, 7 bzw. der Pendelmasse 8 geführt sind.

Die Figur 8 zeigt die Anordnung des Führungsbolzens 11 in den Führungsbahnen 9, 10 im Bereich der Pendelmasse 8 bzw. den Trägerscheiben 6, 7 in einer vergrößerten Darstellung. Man erkennt, dass der Führungsbolzen 11 Spiel hat sowohl in der Führungsbahn 9 als auch in der Führungsbahn 10. Dadurch kann der Führungsbolzen 11 sich in der Führungsbahn 9 verlagern, wobei relativ zu dem Führungsbolzen 11 auch die Pendelmasse 8 verlagerbar ist.

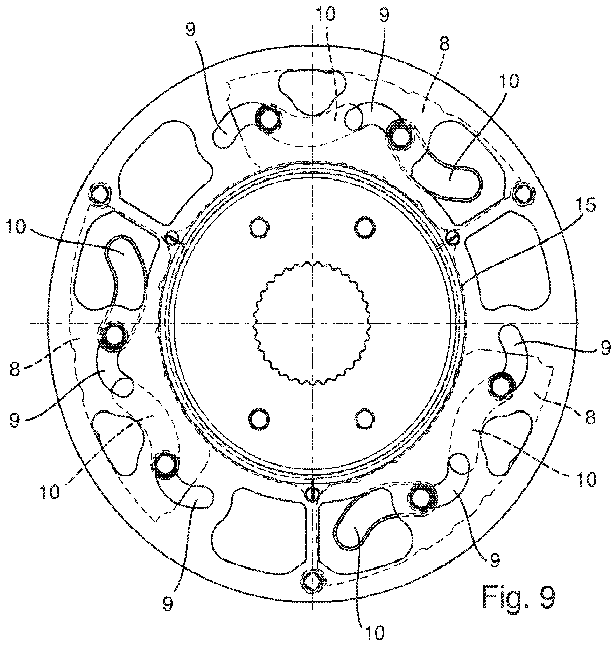

Die Figur 9 zeigt die Anordnung gemäß Figur 5 in einer Betriebssituation, bei welcher die Pendelmassen 8 derart in Umfangsrichtung verlagert sind, dass sie maximal nach radial innen verlagert sind. Man erkennt, dass die Führungsbahnen 9 mit den Führungsbahnen 10 eine fortgesetzte idealisierte gemeinsame Führungsbahn bilden, um die Pendelmassen 8 maximal in Umfangsrichtung als auch in radialer Richtung verlagern zu können. Dabei stoßen die Pendelmassen 8 radial innen an die Anschlagmittel 15 an, welche die Bewegung der Pendelmassen 8 dämpfen.

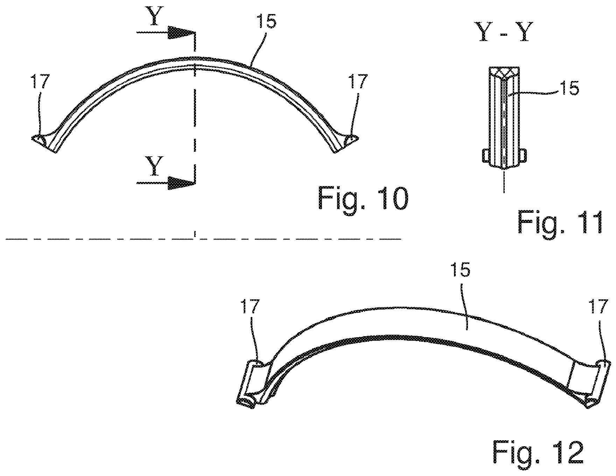

Die Figuren 10 bis 12 zeigen die Anschlagmittel 15 in verschiedenen perspektivischen Darstellungen bzw. im Schnitt. Man erkennt, dass die Anschlagmittel 15 kreissegmentförmig ausgebildet sind und an ihren Enden nach radial außen vorstehende Vorsprünge 17 aufweisen, welche der Anlage der Pendelmassen dienen. Gleichzeitig ist das Anschlagmittel 15 radial innen v-förmig zulaufend ausgebildet, um in einer Nut zwischen den Trägerscheiben 6, 7 aufgenommen zu werden, um dort gegebenenfalls als Reibmittel zu wirken.

### Bezugszeichenliste

- 1: Drehschwingungsdämpfer
- 2: Eingangselement
- 3: Kraftspeicher
- 4: Ausgangselement
- 5: Träger
- 6: Trägerscheibe
- 7: Trägerscheibe
- 8: Pendelmasse
- 9: Führungsbahn
- 10: Führungsbahn
- 11: Führungsbolzen
- 12: Bereich
- 13: Bereich
- 14: Bereich
- 15: Anschlagmittel
- 16: Verbindungselement
- 17: Vorsprung

## Patentansprüche

1. Kupplungsscheibe mit einem Drehschwingungsdämpfer (1), aufweisend radial außen angeordnete Reibbeläge als Eingangselement (2), eine Nabe als Ausgangselement (4), mehrere Kraftspeicher (3) und einen Träger (5), wobei das Eingangselement (2) relativ zum Ausgangselement (4) entgegen der Kraft der Kraftspeicher (3) verdrehbar ist, wobei der Träger (5) mit dem Ausgangselement (4) verbunden ist, wobei mit dem Eingangselement (2) zwei beabstandete Scheiben verbunden sind, welche Fenster aufweisen, in welchen die Kraftspeicher (3) angeordnet sind, und wobei zwischen die beiden Scheiben ein Flansch eingreift, welcher mit der Nabe (4) verbunden ist und ebenso Fenster aufweist, in welche Kraftspeicher (3) eingreifen, **dadurch gekennzeichnet, dass** der Träger (5) aus zwei miteinander verbundenen Trägerscheiben (6,7) ausgebildet ist, wobei die beiden Trägerscheiben (6, 7) als Blechscheiben ausgebildet sind, welche in einem radial inneren Bereich (12) aneinander anliegen und in einem radial äußeren Bereich (13) derart ausgestellt sind, dass sie einen Abstand einnehmen und zumindest eine Pendelmasse (8) zwischen sich aufnehmen. wobei zwischen den beiden Trägerscheiben (6,7) die zumindest eine Pendelmasse (8) relativ zu den Trägerscheiben (6, 7) verlagerbar ist, wobei im radial innersten Bereich (14) des radial äußeren Bereichs (13), radial innerhalb der Pendelmassen (8), ein ringförmiges Anschlagmittel (15) vorgesehen ist zum Dämpfen der radialen Bewegung der Pendelmasse (8) zwischen den Trägerscheiben (6, 7), wobei das Anschlagmittel (15) mehrere kreissegmentförmige Abschnitte aufweist, die jeweils an ihren Enden nach radial außen abstehende Vorsprünge (17) aufweisen, welche der Anlage der Pendelmasse (8) dienen, und wobei jede kreissegmentförmige Abschnitt radial innen V-förmig zulaufend ausgebildet ist. um in einer Nut zwischen den Trägerscheiben (6, 7) aufgenommen zu werden.

2. Kupplungsscheibe nach Anspruch 1, wobei die zumindest eine Pendelmasse (8) über axial vorspringende Elemente (11) in Führungsbahnen (9) in den Trägerscheiben (6, 7) aufgenommen und geführt ist.

3. Kupplungsscheibe nach Anspruch 2, wobei die zumindest eine Pendelmasse (8) zumindest eine Führungsbahn (10) aufweist, in welcher ein Führungsbolzen (11) verlagerbar eingreift, welcher ebenso mit seinen vorspringenden Elementen (11) in jeweils eine Führungsbahn (9) der benachbarten Trägerscheiben (6, 7) eingreift.

4. Kupplungsscheibe nach einem der vorhergehenden Ansprüche, wobei zwischen den Trägerscheiben (6, 7) zwei, drei oder mehr Pendelmassen (8) über den Umfang verteilt angeordnet sind.

5. Kupplungsscheibe nach einem der vorhergehenden Ansprüche, wobei pro Pendelmasse (8) zwei Führungsbolzen (11) vorgesehen sind, welche jeweils in eine Führungsbahn (9, 10) der Trägerscheiben (6, 7) und/oder der Pendelmasse (8) eingreifen.

6. Kupplungsscheibe nach einem der vorhergehenden Ansprüche, wobei die Führungsbahn (9) in der Trägerscheibe (6, 7) bogenförmig ausgebildet ist, wobei der Bogen nach radial innen offen ausgebildet ist.

7. Kupplungsscheibe nach einem der vorhergehenden Ansprüche, wobei die Führungsbahn (10) in der Pendelmasse (8) bogenförmig ausgebildet ist, wobei der Bogen nach radial außen offen ausgebildet ist.

8. Kupplungsscheibe nach einem der vorhergehenden Ansprüche, wobei die Anschlagmittel (15) im ausgestellten radial äußeren Bereich angeordnet sind.

## Claims

1. Clutch disc having a torsional oscilation damper (1), having friction pads arranged radially on the outside as input element (2), a hub as output element (4), a plurality of energy storage devices (3) and a carrier (5), wherein the input element (2) can be rotated relative to the output element (4) counter to the force of the energy storage devices (3), wherein the carrier (5) is connected to the output element (4), wherein two discs which are spaced apart and have windows in which the energy storage devices (3) are arranged are connected to the input element (2), and wherein a flange which is connected to the hub (4) and likewise has windows in which the energy storage devices (3) engage enters between the two discs, **characterized in that** the carrier (5) is formed from two carrier discs (6, 7) which are connected to one another, wherein the two carrier discs (6, 7) are formed as sheet metal discs which bear against one another in a radially inner region (12) and are raised in a radially outer region (13) in such a way that they assume a distance and receive at least one pendulum mass (8) between them, wherein the at least one pendulum mass (8) can be displaced relative to the carrier discs (6, 7) between the two carrier discs (6, 7), wherein an annular stop means (15) for damping the radial movement of the pendulum mass (8) between the carrier discs (6, 7) is provided in the radially innermost region (14) of the radially outer region (13), radially within the pendulum masses (8), wherein the stop means (15) has a plurality of circular segment-shaped sections which each have, at their ends, radially outwardly protruding projections (17) which projections (17) serve to bear against the pendulum mass (8), and wherein each circular segment-shaped section is formed so as to taper in a V-shaped manner radially on the inside in order to be received in a groove between the carrier discs (6, 7).

2. Clutch disc according to Claim 1, wherein the at least one pendulum mass (8) is received and guided via axially protruding elements (11) in guide tracks (9) in the carrier discs (6, 7).

3. Clutch disc according to Claim 2, wherein the at least one pendulum mass (8) has at least one guide track (10) in which a guide pin (11) engages in a displaceable manner, which guide pin likewise engages with its protruding elements (11) in each case in a guide track (9) of the adjacent carrier discs (6, 7).

4. Clutch disc according to one of the preceding claims, wherein two, three or more pendulum masses (8) are arranged distributed over the circumference between the carrier discs (6, 7).

5. Clutch disc according to one of the preceding claims, wherein two guide pins (11) which each engage in a guide track (9, 10) of the carrier discs (6, 7) and/or of the pendulum mass (8) are provided per pendulum mass (8).

6. Clutch disc according to one of the preceding claims, wherein the guide track (9) is formed in an arcuate manner in the carrier disc (6, 7), wherein the arc is formed so as to be open radially on the inside.

7. Clutch disc according to one of the preceding claims, wherein the guide track (10) is formed in an arcuate manner in the pendulum mass (8), wherein the arc is formed so as to be open radially on the outside.

8. Clutch disc according to one of the preceding claims, wherein the stop means (15) are arranged in the raised radially outer region.

## Revendications

1. Disque d'embrayage comprenant un amortisseur de vibrations de torsion (1), comportant des garnitures de friction disposées radialement à l'extérieur en tant qu' élément d'entrée (2), un moyeu en tant qu'élément de sortie (4), plusieurs accumulateurs d'énergie (3) et un support (5), dans lequel l'élément d'entrée (2) est rotatif par rapport à l'élément de sortie (4) contre la force des accumulateurs d'énergie(3), dans lequel le support (5) est raccordé à l'élément de sortie (4), dans lequel deux disques espacés sont raccordés à l'élément d'entrée (2), lesquels disques présentent des fenêtres, dans lesquelles sont disposés les accumulateurs d'énergie (3), et une bride entrant en prise entre les deux disques, laquelle est raccordée au moyeu (4) et comporte également des fenêtres dans lesquelles les accumulateurs d'énergie (3) entrent en prise, **caractérisé en ce que** le support (5) est formé de deux disques porteurs (6, 7) raccordés l'un à l'autre, dans lequel les deux disques porteurs (6, 7) sont conçus sous forme de disques en tôle, lesquels s'appuient l'un sur l'autre dans une zone radialement intérieure (12) et lesquels sont conçus dans une zone radialement extérieure (13) de telle sorte qu'ils sont espacés et reçoivent au moins une masse pendulaire (8) entre eux, l'au moins une masse pendulaire (8) pouvant être déplacée par rapport aux disques porteurs (6, 7) entre les deux disques porteurs (6, 7), dans lequel un moyen de butée annulaire (15) dans la zone radialement la plus intérieure (14) de la zone radialement extérieure (13) est prévu radialement à l'intérieur de la masse pendulaire (8) pour amortir le mouvement radial de la masse pendulaire (8) entre les disques porteurs (6, 7), le moyen de butée (15) comportant plusieurs sections en forme d'arc de cercle, lesquelles comportent à leurs extrémités des saillies (17) faisant saillie radialement vers l'extérieur, lesquelles servent au placement de la masse pendulaire (8), et chaque section en forme d'arc de cercle étant conçue en forme de V s'étendant radialement vers l'intérieur, pour être reçue dans une rainure entre les disques de support (6, 7).

2. Disque d'embrayage selon la revendication 1, dans lequel l'au moins une masse pendulaire (8) est reçue et guidée à l'aide des éléments (11) axialement saillants dans des pistes de guidage (9) dans les disques porteurs (6, 7).

3. Disque d'embrayage selon la revendication 2, dans lequel l'au moins une masse pendulaire (8) comporte au moins une piste de guidage (10), dans laquelle une broche de guidage (11) vient en prise de manière déplaçable, laquelle de même à l'aide de ses éléments saillants (11) vient respectivement en prise dans une piste de guidage (9) des disques porteurs (6, 7) adjacents.

4. Disque d'embrayage selon l'une quelconque des revendications précédentes, dans lequel, entre les disques porteurs (6, 7), deux, trois ou plusieurs masses pendulaires (8) sont disposées réparties sur la circonférence.

5. Disque d'embrayage selon l'une quelconque des revendications précédentes, dans lequel, pour chaque masse pendulaire (8), deux broches de guidage (11) sont prévues, lesquelles viennent respectivement en prise dans une piste de guidage (9, 10) des disques porteurs (6, 7) et/ou de la masse pendulaire (8).

6. Disque d'embrayage selon l'une quelconque des revendications précédentes, dans lequel la piste de guidage (9) dans le disques porteur (6, 7) est arquée, dans lequel l'arc est ouvert radialement vers l'intérieur.

7. Disque d'embrayage selon l'une quelconque des revendications précédentes, dans lequel la piste de guidage (10) dans la masse pendulaire (8) est arquée, dans lequel l'arc est ouvert radialement vers l'extérieur.

8. Disque d'embrayage selon l'une quelconque des revendications précédentes, dans lequel les moyens d'arrêt (15) sont disposés dans la zone radialement extérieure surélevée.
